# EUROPEAN PATENT APPLICATION

(11) **EP 4 215 381 A1**
(43) Date of publication of application: **26.07.2023**
(21) Application number: 21884835.6
(22) Date of filing: 23.09.2021
(51) Int. Cl.: B43L 19/00, B65H 37/00, H02K 49/10

(54) **MAGNETIC TRANSMISSION MECHANISM OF CORRECTION TAPE**

(30) Priority: 30.10.2020 CN 202011195051
(71) Applicant: Yiyang Twingo Stationery Co., Ltd., Quanzhou, Fujian 362000 (CN)
(72) Inventor: WU, Hang, Quanzhou, Fujian 362000 (CN)
(74) Representative: Jannig & Repkow Patentanwälte PartG mbB
(86) International application number: PCT/CN2021/119893
(87) International publication number: WO 2022/089105

(57) **Abstract**

The present disclosure discloses a magnetic transmission mechanism for a correction tape. The magnetic transmission mechanism includes a first rotating magnet and a second rotating magnet. The first rotating magnet and the second rotating magnet are connected to each other by magnetic attraction in a contact or non-contact manner. One of the first rotating magnet and the second rotating magnet is an active member and the other is a follower rotating under magnetic attraction along with the active member. The magnetic transmission mechanism is in transmission connection between a tape supply mechanism and a tape take-up mechanism of the correction tape. With the above technical solution, the magnetic transmission mechanism for a correction tape of the present disclosure has the following beneficial effects: the structure is simple, the magnetic attraction principle is applied to the transmission between the tape supply mechanism and the tape take-up mechanism of the correction tape, and compared with the traditional gear transmission between spools, the present disclosure provides a new option for the transmission between the spools of the correction tape.

## Description

### TECHNICAL FIELD

The present disclosure relates to a correction tape accessory, and particularly relates to a magnetic transmission mechanism for a correction tape.

### BACKGROUND

A correction tape is commonly used as a repair tool for text correction, and mainly includes a housing with a nozzle outlet, a correction tape core with a tape nozzle, a tape supply mechanism and a tape take-up mechanism transmitted through gear engagement. The tape nozzle of the correction tape core extends out of the housing from the nozzle outlet of the housing. The correction tape core has a correction tape body. The two ends of the correction tape body are correspondingly wound on the tape supply mechanism and the tape take-up mechanism. A length of the correction tape body is wound onto the tape nozzle for tape sliding. When in use, the tape nozzle is pressed against the surface of modified text, with the design of gear transmission group, the correction tape body of the correction tape is continuously rotated and supplied to a user for use. The correction tape body is pressed to over the surface of the text to form a re-writable surface, achieving the purpose of text repair.

However, the conventional correction tape with gear transmission has the following problems: the gear transmission requires clearance, thus inevitably generating transmission lag.

In view of this, the inventors of the present disclosure seek to develop a new transmission mechanism between spools of correction tapes, which can achieve transmission while addressing the transmission lag caused by the above-mentioned gear set transmission.

### SUMMARY

In view of this, the present disclosure aims to provide a new (magnetic) transmission method for transmission between spools of a correction tape, i.e., to provide a magnetic transmission mechanism to address transmission lag between the spools.

In order to achieve the objective above, the present disclosure uses the following technical solution.

A magnetic transmission mechanism for a correction tape includes a first rotating magnet and a second rotating magnet, the first rotating magnet and the second rotating magnet being connected to each other by magnetic attraction in a contact or non-contact manner, one of the first rotating magnet and the second rotating magnet being an active member, the other being a follower rotating under magnetic attraction along with the active member, and the magnetic transmission mechanism being in transmission connection between a tape supply mechanism and a tape take-up mechanism of the correction tape.

Further, at least one of the first rotating magnet and the second rotating magnet is a magnet made of a magnetic material and the other is a magnet made of a magnetic material, or the other is a magnet made of a material magnetically attracted.

Further, the first rotating magnet includes a first wheel disc, the second rotating magnet includes a second wheel disc, the first wheel disc is a magnetic iron wheel disc, and the second wheel disc is a magnetic iron wheel disc, or the first wheel disc is a magnetic iron wheel disc, and the second wheel disc is an iron wheel disc, or the first wheel disc is an iron wheel and the second wheel is a magnetic iron wheel.

Further, at least one of the first rotating magnet and the second rotating magnet is an electrically magnetized magnet with an electrical magnetization mechanism and the other is a magnet made of a magnetic material, or the other is a magnet made of a material magnetically attracted, or the other is another electrically magnetized magnet with an electrical magnetization mechanism.

Further, the first rotating magnet includes a first wheel disc, the second rotating magnet includes a second wheel disc, and the electrical magnetization mechanism is arranged on the first wheel disc, or the electrical magnetization mechanism is arranged on the second wheel disc.

Further, the magnetic transmission mechanism includes a third rotating magnet, the first rotating magnet and the third rotating magnet being connected to each other by magnetic attraction in a contact or non-contact manner, and the third rotating magnet and the second rotating magnet being connected to each other by magnetic attraction in a contact or non-contact manner.

Further, at least one of the first rotating magnet and the third rotating magnet is a magnet made of a magnetic material and the other is a magnet made of a magnetic material, or the other is a magnet made of a material magnetically attracted; and
at least one of the second rotating magnet and the third rotating magnet is a magnet made of a magnetic material and the other is a magnet made of a magnetic material, or the other is a magnet made of a material magnetically attracted.

Further, at least one of the first rotating magnet and the third rotating magnet is an electrically magnetized magnet with an electrical magnetization mechanism and the other is a magnet made of a magnetic material, or the other is a magnet made of a material magnetically attracted, or the other is another electrically magnetized magnet with an electrical magnetization mechanism; and
at least one of the second rotating magnet and the third rotating magnet is an electrically magnetized magnet with an electrical magnetization mechanism and the other is a magnet made of a magnetic material, or the other is a magnet made of a material magnetically attracted, or the other is another electrically magnetized magnet with an electrical magnetization mechanism.

With the above technical solution, the magnetic transmission mechanism for a correction tape of the present disclosure has the following beneficial effects: the structure is simple, the principle of magnetic attraction is applied to the transmission between the tape supply mechanism and the tape take-up mechanism of the correction tape, and compared with the traditional gear transmission between spools, the present disclosure provides a new option for the transmission between the spools of the correction tape. The transmission lag caused by the traditional gear transmission can be addressed.

Provided is a magnetic transmission mechanism for a correction applied to transmission connection between a tape supply mechanism and a tape take-up mechanism of the correction tape. The magnetic transmission mechanism includes a first rotating magnet and a second rotating magnet, the first rotating magnet and the second rotating magnet being connected to each other by magnetic attraction in a contact or non-contact manner, one of the first rotating magnet and the second rotating magnet being an active member, the other being a follower rotating under magnetic attraction along with the active member, and the magnetic transmission mechanism being in transmission connection between a tape supply mechanism and a tape take-up mechanism of the correction tape.

### BRIEF DESCRIPTION OF THE DRAWINGS

FIG. 1 is a schematic structural diagram of a correction tape of the present disclosure.
FIG. 2 is a schematic structural diagram of the correction tape of the present disclosure with a first housing removed.
FIG. 3 is an exploded view of the correction tape of the present disclosure.
FIG. 4 is a schematic structural diagram of a magnetic transmission mechanism 5 of the present disclosure.
FIG. 5 is a schematic structural diagram of single-spool coaxial transmission of the present disclosure.
FIG. 6 is a schematic structural diagram of double-spool coaxial transmission of the present disclosure.
FIG. 7 is a schematic structural diagram of three-spool coaxial transmission of the present disclosure.
FIG. 8 is a schematic structural diagram of double-spool coaxial transmission (with an electrical magnetization mechanism) of the present disclosure.
FIG. 9 is a schematic structural diagram of a unidirectional engagement tooth ring of the present disclosure.
FIG. 10 is a schematic structural diagram of an anti-reversal mechanism of the present disclosure.
FIG. 11 is a schematic structural diagram of mating of a magnetic clutch mechanism of the present disclosure.

In the drawings:
Housing-1; Tape nozzle-2;
Tape supply mechanism-3; Tape supply core-31;
Tape supply spool-32; Tape supply pressing ring-321;
Tape take-up mechanism-4; Tape take-up core-41;
Tape take-up spool-42; Tape take-up pressing ring-421;
First rotating magnet 51; Second rotating magnet-52;
Electrical magnetization mechanism-53; Auxiliary transmission mechanism-6;
Anti-reversal mechanism-7; Unidirectional engagement tooth ring-71;
Beveled unidirectional teeth-711; Beveled surface-7111;
Tooth tip-72; First tooth tip-721;
Second tooth tip-722; Third tooth tip-723; and
Elastic rib-73

### DETAILED DESCRIPTION OF THE EMBODIMENTS

In order to further explain the technical solutions of the present disclosure, the present disclosure will be illustrated below with specific embodiments.

### Embodiment 1

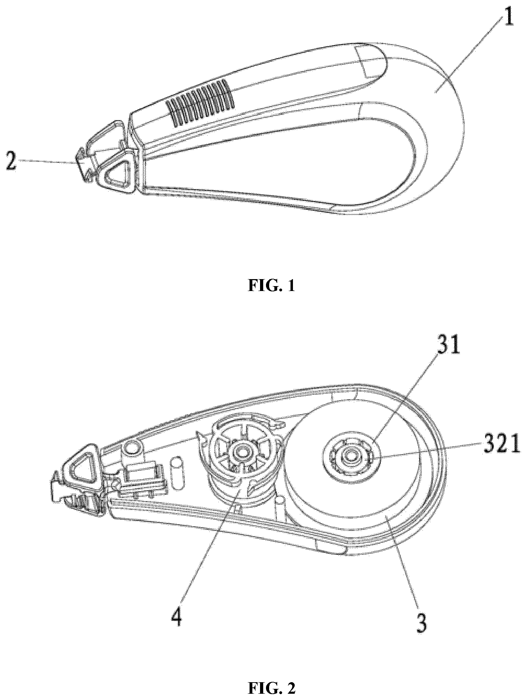

A magnetic attraction transmission correction tape of the present disclosure is shown in FIGS. 1-4, including a housing 1, a correction tape body (not shown), a tape nozzle 2, a tape supply mechanism 3 and a tape take-up mechanism 4. The tape supply mechanism 3 and the tape take-up mechanism 4 are installed in the housing 1. The housing 1 is provided with a tape outlet. The housing 1 includes a first housing and a second housing which are interlocked. The tape nozzle 2 is installed on the housing 1 corresponding to the tape outlet. The two ends of the correction tape body are wound on the tape supply mechanism 3 and the tape take-up mechanism 4, respectively. A length of the correction tape body is wound on the tape nozzle 2.

The tape supply mechanism 3 includes a first rotating magnet 51. The tape take-up mechanism 4 includes a second rotating magnet 52. The first rotating magnet 51 and the second rotating magnet 52 are connected to each other by magnetic attraction in a contact or non-contact manner, and the two form a magnetic transmission mechanism 5. The magnetic transmission mechanism 5 is applied to transmission between the tape supply mechanism 3 and the tape take-up mechanism 4 (i.e., between spools) of the correction tape. One of the first rotating magnet 51 and the second rotating magnet 52 is an active member and the other is a follower rotating under magnetic attraction along with the active member.

It is to be noted that in the present disclosure, the so-called "magnets" are connection members with the ability to magnetically attract each other.

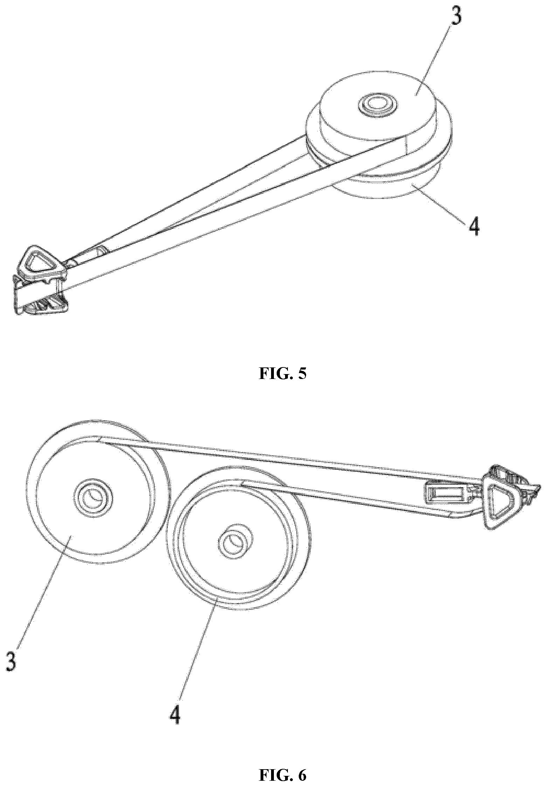

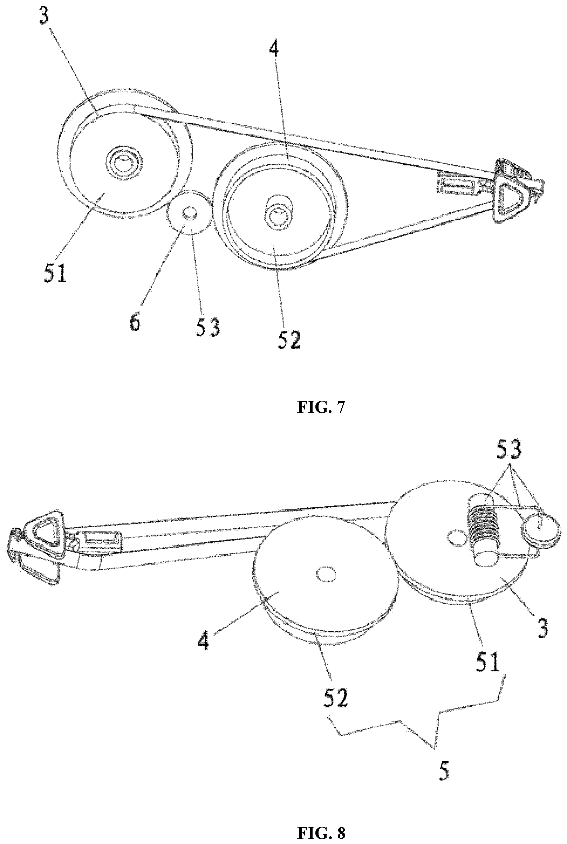

The principle of magnetic transmission above can be applied to a single-spool structure, specifically to coaxial transmission between the spools of the tape supply mechanism 3 and the tape take-up mechanism 4 (as shown in FIG. 5), or to a non-single-spool (two spools and more) structure, such as non-coaxial transmission between the tape supply mechanism 3 and the tape take-up mechanism 4 (as shown in FIGS. 6 and 7). The magnets of the two may be connected to each other with or without contact.

Specifically, the principle of magnetic transmission above can be applied to a two-spool structure, specifically to the transmission of the spools of the tape supply mechanism 3 and the tape take-up mechanism 4 (as shown in FIG. 6). The magnets may be in contact (including being overlapped and intersected, or tangent) or may not be in contact (separated) with each other.

The principle of magnetic transmission above can be applied to the three-spool transmission of the tape supply mechanism 3 and the tape take-up mechanism 4 (as shown in FIG. 7, Embodiment 5 below). The magnets may be in contact or may not be in contact with each other.

Further, at least one of first rotating magnet 51 and the second rotating magnet 52 is a magnet made of a magnetic material and the other is a magnet made of a magnetic material, or the other is a magnet made of a material magnetically attracted. In the present disclosure, the magnetic material may be magnetic iron, neodymium iron boron, samarium cobalt, rubber magnet, strong magnetic steel, and the like. The material magnetically attracted may be a ferromagnetic substance, such as iron, cobalt, nickel, and carbon steel, as long as it can achieve magnetic attraction. In this embodiment, the first rotating magnet 51 includes a first wheel disc. The second rotating magnet 52 includes a second wheel disc. The first wheel disc is a magnetic iron wheel disc and the second wheel disc is a magnetic iron wheel disc. Or the first wheel disc is a magnetic iron wheel disc and the second wheel disc is an iron wheel disc. Or the first wheel disc is an iron wheel disc and the second wheel disc is a magnetic iron wheel disc. It is to be noted that the first rotating magnet 51 and the second rotating magnet 52 may be in the form of a wheel sheet (such as a wheel disc in this embodiment), a ring, and the like.

According to the magnetic attraction transmission correction tape of the present disclosure, the principle of magnetic attraction is applied to the transmission between the spools of the correction tape, and compared with the traditional gear transmission between the spools, the present disclosure provides a new option for the transmission between the spools of the correction tape. Moreover, the structure of the correction tape of the present disclosure is simple, and can address transmission lag caused by traditional gear transmission.

### Embodiment 2

The difference between this embodiment and Embodiment 1 lies in that the magnetic transmission mechanism 5 is different.

In this embodiment, as shown in FIG. 8, at least one of the first rotating magnet 51 and the second rotating magnet 52 is an electrically magnetized magnet with an electrical magnetization mechanism 53 and the other is a magnet made of a magnetic material, or the other is a magnet made of a material magnetically attracted, or the other is another electrically magnetized magnet with an electrical magnetization mechanism. In this embodiment, the first rotating magnet 51 includes a first wheel disc. The second rotating magnet 52 includes a second wheel disc. The electrical magnetization mechanism 53 is arranged on the first wheel disc. The first wheel disc is made of a magnetized material (such as iron, cobalt, nickel, and cast steel).

It is to be noted that the electrical magnetization mechanism 53 may also be arranged on the second wheel disc. The second wheel disc may be made of the same material as the first wheel disc.

In the present disclosure, the electrical magnetization mechanism 53 is of a conventional technology, such as including a power supply, a wire, and an iron bar (a magnetized material). The wire is wound on the iron bar. After energized, the iron bar becomes an "electromagnet", which can produce magnetic attraction force.

### Embodiment 3

The difference between this embodiment and Embodiment 1 lies in that the structure of the tape supply mechanism 3 is further defined.

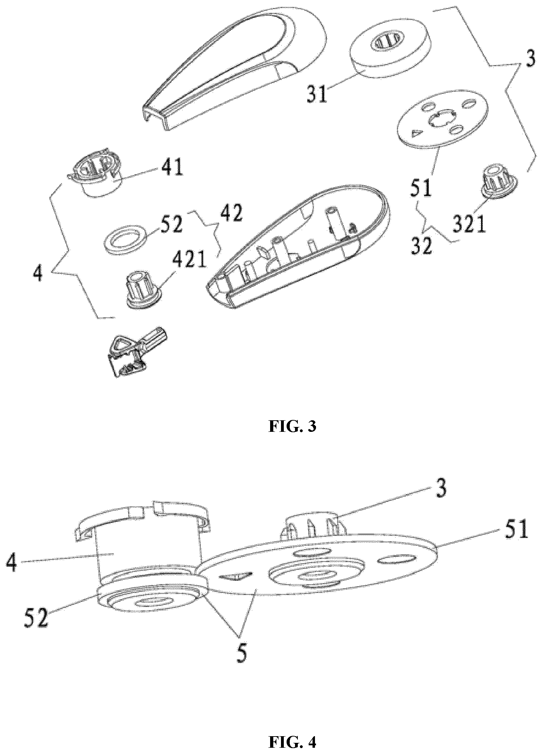

As shown in FIGS. 2 and 3, the tape supply mechanism 3 includes a tape supply core 31 and a tape supply spool 32. The tape supply spool 32 includes a tape supply pressing ring 321 and a first rotating magnet 51 that are fixed together. The tape supply core 31 and the tape supply pressing ring 321 are coaxially nested together, and the tape supply end of the correction tape body is wound and fixed onto the tape supply core 31. The tape body supply part of the correction tape body is located on one side of the first wheel disc, and the first wheel disc has a supporting, protecting, and adjusting effect on the tape body supply part to promote and keep the neat winding of the tape supply body part and avoid the adverse effect on continuous use of the tape body supply part caused by loosening and the like.

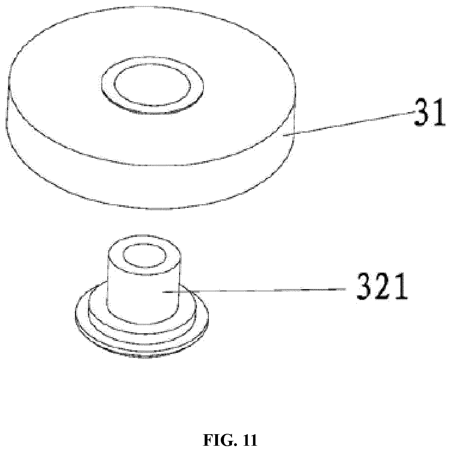

As a preferred implementation, as shown in FIG. 11, at least one of the tape supply core 31 and the tape supply pressing ring 321 is a magnet made of a magnetic material, the other is a magnet made of a magnetic material, or the other is a magnet made of a material magnetically attracted. The tape supply core 31 and the tape supply pressing ring 321 constitute a magnetic clutch mechanism that can adaptively adjust the tension between the tape supply mechanism 3 and the tape supply mechanism 4 to smoothly supply the correction tape body. That is, the magnetic clutch mechanism includes the tape supply core 31 and the tape supply pressing ring 321 that are nested together by magnetic attraction. One of the tape supply core 31 and the tape supply pressing ring 321 is an active member and the other is a follower rotating under magnetic attraction along with the active member to adaptively adjust the transmission ratio between the two to adjust the tension of the correction tape body. It is to be noted that in the present disclosure, the tape supply core 31 is magnetically connected to the tape supply pressure ring 321 in a contact or non-contact manner, as long as magnetic attraction connection can be achieved.

In this embodiment, the magnetic material is magnetic iron, neodymium iron boron, samarium cobalt, rubber magnet, strong magnetic steel, and the like. The material magnetically attracted is a ferromagnetic substance, such as iron, cobalt, nickel, and carbon steel.

In this embodiment, the tape supply core 31 is a magnetic iron tape core and the tape supply pressing ring 321 is an iron pressing ring. Or the tape supply core 31 is a magnetic iron tape core and the tape supply pressing ring 321 is a magnetic iron tape core. Or the tape supply core is an iron tape core and the tape supply pressing ring 321 is a magnetic iron tape core.

As a preferred implementation, at least one of the tape supply core 31 and the tape supply pressing ring 321 is an electrically magnetized magnet with an electrical magnetization mechanism and the other is a magnet made of a magnetic material, or the other is a magnet made of a material magnetically attracted, or the other is another electrically magnetized magnet with an electrical magnetization mechanism.

It is to be noted that the electrical magnetization mechanism of the present disclosure is of a conventional technology, as long as a magnetic field can be generated after energization, so it will not be described in detail here.

The magnetic attraction transmission correction tape of the present disclosure has a magnetic clutch mechanism that applies the principle of magnetic attraction to the inside of the tape supply mechanism 3. Compared with the traditional way of adjusting the tension of the correction tape body (i.e., adjusting the transmission ratio) by friction slipping, the magnetic clutch mechanism of the present disclosure is simple in structure and responsive, and provides a new way of adjusting the tension of the correction tape body for the tape supply mechanism 3.

### Embodiment 4

The difference between this embodiment and Embodiment 1 lies in that the structure of the tape take-up mechanism 4 is further defined.

As shown in FIGS. 2 and 3, the tape take-up mechanism 4 includes a tape take-up core 41 and a tape take-up spool 42. The tape take-up spool 42 includes a tape take-up pressing ring 421 and a second rotating magnet 52 that are fixed together. The tape take-up core 41 and the tape take-up pressing ring 421 are coaxially nested together, and the tape take-up end of the correction tape body is wound and fixed onto the tape take-up core 41.

The tape body take-up part of the correction tape body is located on one side of the second wheel disc, and the second wheel disc has a supporting, protecting, and adjusting effect on the tape body take-up part to promote and keep the neat winding of the tape take-up body part and avoid the adverse effect on continuous use of the tape body take-up part caused by loosening and the like.

Further, at least one of the tape take-up core 41 and the tape take-up pressing ring 421 is a magnet made of a magnetic material, the other is a magnet made of a magnetic material, or the other is a magnet made of a material magnetically attracted. The tape take-up core 41 and the tape take-up pressing ring 421 constitute a magnetic clutch mechanism that can adaptively adjust the tension between the tape supply mechanism 3 and the tape take-up mechanism 4 to smoothly supply the correction tape body. That is, the magnetic clutch mechanism includes the tape take-up core 41 and the tape take-up pressing ring 421 that are nested together by magnetic attraction. One of the tape take-up core 41 and the tape take-up pressing ring 421 is an active member and the other is a follower rotating under magnetic attraction along with the active member to adaptively adjust the transmission ratio between the two to adjust the tension of the correction tape body. It is to be noted that in the present disclosure, the tape take-up core 41 is magnetically connected to the tape supply pressure ring 421 in a contact or non-contact manner, as long as magnetic attraction connection can be achieved.

In this embodiment, the magnetic material is magnetic iron, neodymium iron boron, samarium cobalt, rubber magnet, strong magnetic steel, and the like. The material magnetically attracted is a ferromagnetic substance, such as iron, cobalt, nickel, and carbon steel.

In this embodiment, the tape take-up core 41 is a magnetic iron tape core and the tape take-up pressing ring 421 is an iron pressing ring. Or the tape take-up core 41 is a magnetic iron tape core and the tape take-up pressing ring 421 is a magnetic iron tape core. Or the tape take-up core is an iron tape core and the tape take-up pressing ring 421 is a magnetic iron tape core.

As a preferred implementation, at least one of the tape take-up core 41 and the tape take-up pressing ring 421 is an electrically magnetized magnet with an electrical magnetization mechanism and the other is a magnet made of a magnetic material, or the other is a magnet made of a material magnetically attracted, or the other is another electrically magnetized magnet with an electrical magnetization mechanism.

It is to be noted that the electrical magnetization mechanism of the present disclosure is of a conventional technology, as long as a magnetic field can be generated after energization, so it will not be described in detail here.

The magnetic attraction transmission correction tape of the present disclosure has a magnetic clutch mechanism that applies the principle of magnetic attraction to the inside of the take-up mechanism 4. Compared with the traditional way of adjusting the tension of the correction tape body (i.e., adjusting the transmission ratio) by friction slipping, the magnetic clutch mechanism of the present disclosure is simple in structure and responsive, and provides a new way of adjusting the tension of the correction tape body for the tape take-up mechanism 4.

### Embodiment 5

The difference between this embodiment and Embodiment 1 lies in that the structure of the correction tape is further defined.

The magnetic attraction transmission correction tape of the present disclosure, as shown in FIG. 7, further includes an auxiliary transmission mechanism 6. The auxiliary transmission mechanism 6 has a third rotating magnet 53. The first rotating magnet 51 and the third rotating magnet 53 are connected to each other by magnetic attraction in a contact or non-contact manner. The third rotating magnet 53 and the second rotating magnet 52 are connected to each other by magnetic attraction in a contact or non-contact manner.

As a preferred implementation, at least one of first rotating magnet 51 and the third rotating magnet 53 is a magnet made of a magnetic material and the other is a magnet made of a magnetic material, or the other is a magnet made of a material magnetically attracted.

At least one of second rotating magnet 52 and the third rotating magnet 53 is a magnet made of a magnetic material and the other is a magnet made of a magnetic material, or the other is a magnet made of a material magnetically attracted.

As a preferred implementation, at least one of first rotating magnet 51 and the third rotating magnet 53 is an electrically magnetized magnet with an electrical magnetization mechanism and the other is a magnet made of a magnetic material, or the other is a magnet made of a material magnetically attracted, or the other is another electrically magnetized magnet with an electrical magnetization mechanism.

At least one of second rotating magnet 52 and the third rotating magnet 53 is an electrically magnetized magnet with an electrical magnetization mechanism and the other is a magnet made of a magnetic material, or the other is a magnet made of a material magnetically attracted, or the other is another electrically magnetized magnet with an electrical magnetization mechanism.

In this embodiment, the magnetic material is magnetic iron, neodymium iron boron, samarium cobalt, rubber magnet, strong magnetic steel, and the like. The material magnetically attracted is a ferromagnetic substance, such as iron, cobalt, nickel, and carbon steel. The electrical magnetization mechanism is of a conventional technology, as long as a magnetic field can be generated after energization, so it will not be described in detail here.

### Embodiment 6

The difference between this embodiment and Embodiment 1 lies in that the structure of the correction tape is further defined.

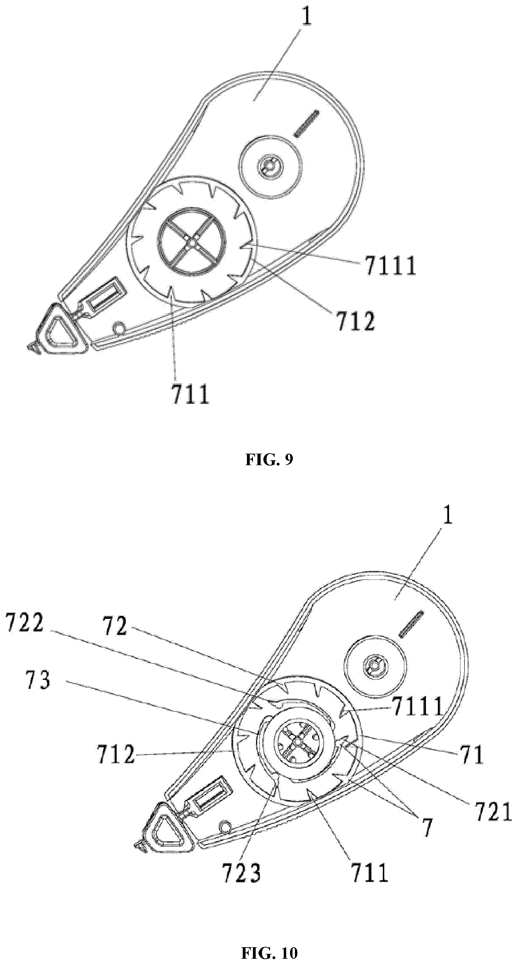

The magnetic attraction transmission correction tape of the present disclosure, as shown in FIGS. 9 and 10, is provided with an anti-reversal mechanism 7 that causes a correction tape core to rotate unidirectionally. The anti-reversal mechanism 7 includes a unidirectional engagement tooth ring 71 and at least two tooth tips 72. The unidirectional engagement tooth ring 71 is arranged on the inner surface of the housing 1. The tooth tips 72 are arranged on the tape supply mechanism 3 or the tape take-up mechanism 4, or on both the tape supply mechanism 3 and the tape take-up mechanism 4. The unidirectional engagement tooth ring 71 is arranged in correspondence with the tooth tips 72. The unidirectional engagement tooth ring 71 includes a ring body 712, and a plurality of beveled unidirectional teeth 711 arranged on the ring body 712 at intervals. The beveled unidirectional teeth 711 are located on the inner side of the ring body 712 (the location of center point of the ring is taken as the inside). The tooth tips 72 and the beveled unidirectional teeth 711 are engaged with each other in a staggered manner. Staggered contact fits are formed between different tooth tips 72 and the beveled unidirectional teeth 711.

The beveled unidirectional tooth 711 is provided with a beveled surface 7111 and an end face. The tooth tips 72 are meshed with the beveled surfaces 7111 of the unidirectional gear ring in a staggered manner.

A spacing S is formed between adjacent beveled unidirectional teeth 711 respectively, and the positions of different tooth tips 72 relative to the spacings S are different.

Each tooth tip 72 is connected to one end of an elastic rib 73, and the other end of each elastic rib 73 is connected to a tape supply core of the tape supply mechanism 3 or a tape take-up core of the tape take-up mechanism 4, respectively. The tooth tips 72 are laid in the circumferential direction of the tap supply core or the tape take-up core.

In this embodiment, the number of the tooth tips 72 is three, namely, a first tooth tip 721, a second tooth tip 722, and a third tooth tip 723. The corresponding three elastic ribs 73 are connected to the tape take-up core (circle) of the tape take-up mechanism 4. The three elastic ribs 73 are laid along the circumferential direction of the tape take-up core. The length direction of each elastic rib is parallel to the circumferential direction of the peripheral wall of the tape take-up core.

Preferably, the spacing S between each two adjacent beveled unidirectional teeth 711 is equal. Taking the state of a non-tape-sliding operation as a reference, the first tooth tip 721 corresponds to the first spacing S, the second tooth tip 722 corresponds to the second spacing S, and the third tooth tip 723 corresponds to the third spacing S. The position of the first tooth tip 722 corresponding to the first spacing S is a first site, the position of the second tooth tip 723 corresponding to the second spacing S is a second site, and the position of the third tooth tip 723 corresponding to the third spacing S is a third site. Compared with the spacing S, the positions of the first site, the second site, and the third site relative to the spacing S are different. That is, the tooth tip 72 and the beveled unidirectional tooth 711 is in staggered contact. In this way, the situation, for example, three tooth tips 72 come into contact friction with the beveled unidirectional teeth 711 at the same time, can be avoided, realizing the effect of reducing the tape sliding noise.

In this embodiment, take the correction tapes of common specifications in the market as an example, the number of beveled unidirectional teeth 711 is ten, and the inner side of the ring body 712 (the face near the center of the ring) is away from the tooth tip 72, which can avoid the knocking of the tooth tip 72 and reduce the tape sliding noise.

It is to be noted that in the present disclosure, the number of the beveled unidirectional teeth 711, the number of the tooth tips 72, and the design of the spacing S can be adjusted according to the actual situation.

The above embodiments and drawings are not intended to limit the form and pattern of products of the present disclosure.

Any appropriate variations or modifications made by those skilled in the art shall be deemed not to depart from the scope of the present disclosure.

## Claims

1. A magnetic transmission mechanism for a correction tape, comprising a first rotating magnet and a second rotating magnet, the first rotating magnet and the second rotating magnet being connected to each other by magnetic attraction in a contact or non-contact manner, one of the first rotating magnet and the second rotating magnet being an active member, the other being a follower rotating under magnetic attraction along with the active member, and the magnetic transmission mechanism being in transmission connection between a tape supply mechanism and a tape take-up mechanism of the correction tape.

2. The magnetic transmission mechanism for a correction tape according to claim 1, wherein at least one of the first rotating magnet and the second rotating magnet is a magnet made of a magnetic material and the other is a magnet made of a magnetic material, or the other is a magnet made of a material magnetically attracted.

3. The magnetic transmission mechanism for a correction tape according to claim 2, wherein the first rotating magnet comprises a first wheel disc, the second rotating magnet comprises a second wheel disc, the first wheel disc is a magnetic iron wheel disc, and the second wheel disc is a magnetic iron wheel disc, or the first wheel disc is a magnetic iron wheel disc, and the second wheel disc is an iron wheel disc, or the first wheel disc is an iron wheel disc and the second wheel disc is a magnetic iron wheel disc.

4. The magnetic transmission mechanism for a correction tape according to claim 1, wherein at least one of the first rotating magnet and the second rotating magnet is an electrically magnetized magnet with an electrical magnetization mechanism and the other is a magnet made of a magnetic material, or the other is a magnet made of a material magnetically attracted, or the other is another electrically magnetized magnet with an electrical magnetization mechanism.

5. The magnetic transmission mechanism for a correction tape according to claim 4, wherein the first rotating magnet comprises a first wheel disc, the second rotating magnet comprises a second wheel disc, and the electrical magnetization mechanism is arranged on the first wheel disc, or the electrical magnetization mechanism is arranged on the second wheel disc.

6. The magnetic transmission mechanism for a correction tape according to claim 1, comprising a third rotating magnet, the first rotating magnet and the third rotating magnet being connected to each other by magnetic attraction in a contact or non-contact manner, and the third rotating magnet and the second rotating magnet being connected to each other by magnetic attraction in a contact or non-contact manner.

7. The magnetic transmission mechanism for a correction tape according to claim 6, wherein at least one of the first rotating magnet and the third rotating magnet is a magnet made of a magnetic material and the other is a magnet made of a magnetic material, or the other is a magnet made of a material magnetically attracted; and
at least one of the second rotating magnet and the third rotating magnet is a magnet made of a magnetic material and the other is a magnet made of a magnetic material, or the other is a magnet made of a material magnetically attracted.

8. The magnetic transmission mechanism for a correction tape according to claim 6, wherein at least one of the first rotating magnet and the third rotating magnet is an electrically magnetized magnet with an electrical magnetization mechanism and the other is a magnet made of a magnetic material, or the other is a magnet made of a material magnetically attracted, or the other is another electrically magnetized magnet with an electrical magnetization mechanism; and
at least one of the second rotating magnet and the third rotating magnet is an electrically magnetized magnet with an electrical magnetization mechanism and the other is a magnet made of a magnetic material, or the other is a magnet made of a material magnetically attracted, or the other is another electrically magnetized magnet with an electrical magnetization mechanism.

9. A magnetic transmission mechanism for a correction tape, applied to transmission connection between a tape supply mechanism and a tape take-up mechanism of the correction tape.
